# FASCICULE DE BREVET EUROPEEN

(11) **EP 2 584 808 B1**
(45) Date de publication et mention de la délivrance du brevet: **20.07.2016**
(21) Numéro de dépôt: 12188836.6
(22) Date de dépôt: 17.10.2012
(51) Int. Cl.: H04W 12/06, H04L 29/06, H04W 8/20

(54) **Système de gestion d'identité numérique**
System zur Verwaltung einer digitalen Identität
System for managing digital identity

(30) Priorité: 20.10.2011 FR 1159511
(43) Date de publication de la demande: 24.04.2013
(73) Titulaire: Société Française du Radiotéléphone-SFR, 75008 Paris (FR); Ecole Nationale Supérieure d'Ingénieurs de Caen, 14050 Caen Cedex 4 (FR)
(72) Inventeur: Teimoorzadeh, Kourosh, 28130 Bouglainval (FR); Vincent, Johann, Caen 14000 (FR); Wary, Jean-Philippe, 92340 Bourg-La-Reine (FR); Pailles, Jean-Claude, 14610 Epron (FR); Rosenberger, Christophe, 14220 Saint Laurent De Condel (FR)
(74) Mandataire: Beaudouin-Lafon, Emmanuel

(56) Documents cités:
- US-A1- 2011 126 010
- "A framework for user control of digital identity; X.1251 (09/09)", ITU-T STANDARD, INTERNATIONAL TELECOMMUNICATION UNION, GENEVA ; CH, no. X.1251 (09/09), 25 septembre 2009 (2009-09-25), pages 1-26, XP017436359,

## Description

L'invention concerne la gestion et les transactions relatives à l'identité numérique d'un sujet, qui est un utilisateur d'un terminal mobile de communication tel qu'un téléphone mobile encore appelé ordiphone.

### ARRIERE PLAN DE L'INVENTION

L'invention concerne la gestion d'identité numérique, c'est-à-dire la gestion des données relatives à l'identité numérique d'un sujet qui est normalement une personne physique utilisant un terminal de communication tel qu'un téléphone mobile.

D'une manière générale, on entend par identité numérique un ensemble d'attributs, c'est-à-dire de données personnelles, qui se rapportent au sujet. Dans une grande quantité de cas, ces attributs se résument au pseudonyme du sujet et à son mot de passe.

Mais d'une façon plus générale, la notion d'attribut de l'identité numérique d'un sujet englobe, outre les pseudonymes et mots de passe du sujet, son prénom, son nom, sa date de naissance, son adresse, son âge, sa taille, son numéro de sécurité sociale, de passeport etc.

En pratique, lorsque le sujet accède depuis son terminal mobile à un réseau social, lorsqu'il relève son courrier électronique, ou encore lorsqu'il effectue un achat en ligne, une authentification auprès du serveur concerné est réalisée.

Le plus souvent, cette authentification est assurée au moyen d'un identifiant et d'un mot de passe utilisés à chaque connexion au service demandé.

Lorsqu'il s'agit de l'accès à un serveur de courrier électronique, l'identifiant et le mot de passe sont mémorisés dans le terminal mobile qui les fournit automatiquement au serveur de courrier électronique à chaque relève de courrier.

Au contraire, dans le cas des achats en ligne, l'utilisateur doit en général fournir son identifiant et son mot de passe à chaque nouvel achat, ou tout au moins de façon régulière.

Avec ce type de système qui est centré sur les fournisseurs de services, le sujet est rapidement détenteur d'une foultitude d'identifiants et de mots de passe relatifs aux différents fournisseurs de service qu'il utilise. En pratique, il est complexe pour le sujet de mémoriser tous ces identifiants et mots de passe. Un tel état de la technique est connu de US 2011/126010 A1.

D'autres systèmes qui sont centrés sur le sujet ont vu le jour, comme par exemple OpenId. De tels systèmes sont conçus pour qu'un même sujet puisse s'authentifier auprès de différents fournisseurs de service en utilisant toujours le même identifiant et le même mot de passe.

Un fournisseur d'identité est une entité d'authentification, qui peut transmettre à un fournisseur de service tiers des attributs d'identité du sujet, après avoir authentifié le sujet et obtenu l'accord de ce dernier pour cette transmission.

Concrètement, un fournisseur d'identité est une entité, comme par exemple les entités dénommées par les marques déposées Google et Facebook, à laquelle tout fournisseur de service peut s'adresser lorsqu'il est sollicité par un sujet, pour réaliser l'authentification de ce sujet, pour autant que ce dernier ait un compte chez le fournisseur d'identité en question.

### OBJET DE L'INVENTION

Le but de l'invention est de proposer un système de gestion d'identité numérique centré sur le sujet, qui puisse constituer une alternative valable aux systèmes existant.

### RESUME DE L'INVENTION

A cet effet, l'invention a pour objet un procédé pour gérer un transfert de données relatives à l'identité numérique d'un sujet, entre un terminal de communication utilisé par le sujet et un fournisseur de service, dans lequel :
- le fournisseur de service adresse au terminal de communication une requête de revendication d'identité spécifiant les attributs de l'identité numérique du sujet devant être fournis avec des attestations correspondantes, ainsi que des critères devant être remplis par ces attestations pour qu'elles soient acceptables pour le fournisseur de service, les attestations relatives à des attributs distincts pouvant le cas échéant provenir de fournisseurs d'identité distincts ;
- dans lequel c'est un composant de sécurité actif résidant dans le terminal de communication qui construit la revendication d'identité à partir de données relatives à l'identité numérique du sujet mémorisées dans le terminal et/ou collectées par ce composant de sécurité actif auprès d'un ou plusieurs fournisseurs d'identité accessible par internet ;
- et dans lequel c'est la revendication d'identité construite par le composant de sécurité actif résidant dans le terminal de communication qui est adressée au fournisseur de service pour acceptation.

Selon l'invention, le composant de sécurité actif joue un rôle d'intermédiaire entre le fournisseur de service et les différents fournisseurs d'identité auxquels le sujet est lié.

L'invention permet d'enrichir le contenu d'une identité numérique : différents attributs de l'identité numérique peuvent être fournis et attestés par différents fournisseurs d'identité. Ces attributs et leurs attestations sont collectés par le composant de sécurité actif qui les fournit sous forme d'un seul ensemble de données au fournisseur de service les ayant demandées.

L'invention permet notamment de renforcer les éléments d'identité, en y ajoutant des informations supplémentaires. Il est ainsi possible d'associer à des données propres à l'identité d'un sujet en tant que telle, des informations techniques contextuelles supplémentaires, se rapportant également à son identification, telles que l'adresse IP du terminal utilisé, les données de géolocalisation et autres.

Ainsi, l'invention permet d'offrir plus de souplesse et de précision pour renforcer l'efficacité et la pertinence du processus de transfert de données relatives à l'identité numérique, entre un sujet et un fournisseur de service sollicité par ce sujet.

L'invention concerne également un procédé tel que défini ci-dessus, dans lequel le composant de sécurité actif résidant dans le terminal de communication comporte une ou plusieurs composants d'application résidant dans une carte SIM équipant le terminal de communication.

L'invention concerne également un procédé tel que défini ci-dessus, dans lequel une partie des attributs de l'identité numérique du sujet sont mémorisés directement dans le terminal de communication.

L'invention concerne également un procédé tel que défini ci-dessus, dans lequel le composant de sécurité actif sollicite l'utilisateur pour qu'il donne son accord à la transmission de données relatives à son identité numérique lorsque ces données sont considérées comme critiques.

L'invention concerne également un procédé tel que défini ci-dessus, dans lequel le composant de sécurité actif est agencé pour pouvoir attester des attributs de la revendication d'identité au nom de l'opérateur auquel le terminal de communication est lié.

### DESCRIPTION DETAILLEE DE L'INVENTION

### Généralités

L'idée à la base de l'invention est d'ajouter un quatrième acteur aux trois acteurs habituels d'un système centré sur l'utilisateur, et qui sont : le sujet qui possède l'identité numérique ; le fournisseur d'identité qui atteste et fournit l'identité du sujet ; et le fournisseur de services qui fournit le service en échange d'une identité.

Ce quatrième acteur est l'opérateur technique lié au terminal de communication, c'est-à-dire l'opérateur qui gère le transport de données vers et depuis le terminal de communication, ainsi qu'un composant de sécurité actif tel qu'une carte SIM ou analogue résidant dans le terminal.

L'invention permet ainsi d'utiliser le terminal de communication comme outil de transaction de la vie quotidienne, en mettant en oeuvre un composant de sécurité actif résidant dans le terminal, pour y mémoriser tout ou partie de l'identité numérique du sujet, c'est-à-dire du possesseur de ce terminal.

L'invention est décrite ci-après dans son application avec un terminal de communication mobile, c'est-à-dire un téléphone portable. Mais elle s'applique à tout type de terminal de communication, tel qu'un téléphone portable, un ordinateur, ou encore un modem de type ADSL ou autre.

Le composant de sécurité actif qui réside dans le terminal comprend un composant logiciel et éventuellement un composant de mémoire, présentant un haut niveau de sécurisation.

Dans le cas d'une mise en oeuvre de l'invention sur un terminal mobile, ce composant de sécurité actif comporte notamment un ou des composants d'application de la carte SIM équipant le terminal mobile coopérant avec un composant d'application exploité par le processeur de ce terminal et dit application mobile.

Dans d'autres mises en oeuvre, le composant de sécurité actif consiste principalement en un élément logiciel hautement sécurisé. Il peut être enregistré dans la mémoire de l'appareil, dans une carte à puce dédiée, dans la mémoire d'une clé USB, et il est exploité par le processeur du terminal.

Le choix, selon l'invention, d'un composant de sécurité actif résidant dans le terminal, permet de mettre en oeuvre une identité numérique de type polymorphe. Ce composant de sécurité constitue un intermédiaire capable de collecter des attributs de l'identité numérique auprès de différents fournisseurs d'identité, pour répondre à une demande d'un fournisseur de service.

Cette solution permet en outre de fournir des attributs supplémentaires à l'identité numérique du sujet, comme par exemple l'adresse IP du terminal mobile, ce qui permet le cas échéant d'augmenter encore le niveau d'authentification.

En pratique, lorsque le sujet sollicite un fournisseur de service via son terminal mobile, ce fournisseur peut adresser une requête de revendication d'identité au terminal mobile pour fournir ou non le service demandé selon que l'identité du sujet répond ou non à des critères prédéterminés.

C'est par exemple le cas lorsque le fournisseur de service est un système de paiement par internet, un terminal de paiement de type NFC (Near Field Communication), ou encore une application installée dans le téléphone mobile telle qu'une application de jeu en réseau se connectant à un serveur central.

La requête de revendication d'identité établie par le fournisseur de service est une demande requérant que soit retournée une revendication d'identité, c'est-à-dire un ensemble d'attributs de l'identité numérique du sujet avec les attestations correspondantes, ces données étant selon l'invention établies et/ou collectées par le composant de sécurité actif pour être adressées au fournisseur de service.

Lorsque le fournisseur de service considère que la revendication d'identité répond à un ensemble de critères prédéterminés et qui lui sont propres, il accepte de fournir au sujet le service demandé.

### Le composant de sécurité actif

Le composant de sécurité actif constitue le fournisseur d'identité, c'est-à-dire l'entité qui répond à la requête du fournisseur de service.

Il dispose ainsi des interfaces d'échange dédiées avec des composants impliqués dans le processus tels que le terminal de communication, le fournisseur de service, l'opérateur technique qui gère le transport de données depuis et vers le terminal de communication.

Ainsi, dans le cas d'un terminal mobile, ce composant de sécurité comporte une application mobile exploitée par le processeur du terminal mobile, et une ou plusieurs applications SIM coopérant avec cette application mobile pour construire une revendication d'identité répondant à la requête adressée par le fournisseur de service. Une application SIM est une application résidant dans la carte SIM (Subscriber Identity Module) du terminal mobile.

Lorsque la requête de revendication d'identité est reçue, la revendication d'identité est établie par le composant de sécurité actif sur la base d'informations lues dans la mémoire de la carte SIM, et/ou demandées par le composant de sécurité actif à un fournisseur d'identité tiers accessible typiquement par internet, la collecte de ces informations étant réalisée par l'intermédiaire d'une ou plusieurs applications SIM.

Ce composant de sécurité actif constitue un point d'entrée unique des requêtes de revendication d'identité : il accède aux attributs sur la base desquels il construit la revendication d'identité. Comme on le comprend, la revendication d'identité construite par le composant de sécurité actif peut comporter des attributs et des attestations d'origine différentes : par exemple, le nom et le prénom du sujet peuvent être attestés par un premier fournisseur d'identité, et l'adresse du sujet peut être fournie et attestée par un autre sujet.

Le composant de sécurité actif permet au sujet de gérer son identité : il peut par exemple valider ou refuser son consentement à la transmission de certains attributs de son identité numérique que le fournisseur de service demande. Avantageusement, le composant de sécurité actif est conçu pour que le sujet puisse sélectionner son identité en lien avec le fournisseur d'identité.

Dans ce cas, le sujet a avantageusement la possibilité de choisir le ou les fournisseurs d'identité qu'il souhaite utiliser pour transférer des données de son identité numérique sur requête d'un fournisseur de service donné.

### Protection de la vie privée

Le composant de sécurité actif identifie le fournisseur de service ayant émis la requête de revendication d'identité, au moyen des éléments fournis dans cette requête de revendication d'identité. Celle-ci contient par exemple un certificat numérique permettant d'attester de l'identité du fournisseur de service ayant établi et adressé la requête de revendication d'identité.

Ce composant de sécurité actif est en outre tenu par une politique d'identité numérique qui lui permet de déterminer quels fournisseurs d'identité distants peuvent fournir les attributs de la revendication d'identité demandée par le fournisseur de service dans sa requête. Par exemple, le sujet peut configurer le composant de sécurité actif pour qu'il refuse de fournir des données relatives à son identité numérique à tel ou tel fournisseur de service.

Ce composant de sécurité actif est lié par une politique de protection de la vie privée, sur la base de laquelle ce composant actif informe l'utilisateur quant un fournisseur de service demande dans sa requête de revendication d'identité un ou des attributs sensibles et/ou devant normalement être protégées.

Dans ce cadre, le composant de sécurité actif peut également répondre au fournisseur de service en lui demandant de modifier la requête pour qu'elle respecte la politique de protection de la vie privée par laquelle est lié le composant de sécurité actif.

Avantageusement, le sujet a encore la possibilité de configurer le composant de sécurité actif pour qu'il refuse de fournir des informations relatives à son identité numérique, à un fournisseur de service qui ne s'engagerait pas à conserver ces données confidentielles.

Ainsi, le composant de sécurité actif permet de négocier le contenu de la requête de revendication d'identité du fournisseur de service, de façon à déterminer un contenu permettant de répondre à la fois à politique de protection de la vie privée du composant de sécurité actif et à la politique de protection de la vie privée du fournisseur de service.

### Etablissement de la revendication d'identité

Lorsque le contenu de la requête de revendication d'identité répond à la politique de respect de la vie privée du composant de sécurité actif, celui-ci choisit les attributs permettant de répondre à cette requête. Le composant de sécurité actif détermine ensuite les fournisseurs d'identité pouvant attester de ces attributs, en fonction des préconisations données à ce sujet dans la requête de revendication d'identité.

L'application mobile du composant de sécurité actif adresse alors une requête à l'application SIM pour que celle-ci lui fournisse les attributs ou données nécessaires à l'établissement de la revendication d'identité. L'application SIM répond alors à cette requête soit directement soit après avoir adressé les requêtes correspondantes aux fournisseurs d'identités externes, de manière à collecter les attributs et attestations demandées.

Eventuellement, l'application SIM présente différents choix au sujet en ce qui concerne les attributs à transmettre. Par exemple, l'application présente les fournisseurs d'identité proposés dans la requête du fournisseur de service sous la forme d'icônes que l'utilisateur doit sélectionner.

Le composant de sécurité actif établit ensuite la réponse à la requête, c'est-à-dire la revendication d'identité qui comporte une série d'attributs et d'attestations de ces attributs, avant d'adresser cette revendication au fournisseur de service.

Le cas échéant, le composant de sécurité actif bâtit la revendication d'identité en dérivant un ou plusieurs attributs de l'identité numérique, c'est-à-dire en déduisant de la valeur d'un attribut la réponse demandée par le fournisseur de service dans sa requête.

Par exemple, si la requête de revendication d'identité du fournisseur de service comporte la question "Etes-vous majeur ?", le composant de sécurité actif collecte l'attribut que constitue la date de naissance de l'identité numérique du sujet, et dérive de cette date de naissance l'âge du sujet pour déterminer s'il est majeur ou non, ce qui permet de répondre à la question posée sans divulguer l'âge ni la date de naissance.

Comme on l'aura compris, préalablement à l'établissement de la réponse, le composant de sécurité actif a avantageusement authentifié le sujet, par exemple en lui demandant le mot de passe de la carte SIM, ce qui constitue un élément supplémentaire d'authentification du sujet ayant en main le terminal mobile.

### Requête de revendication d'identité

Comme indiqué plus haut, lorsque le fournisseur de service établit une requête de revendication d'identité, il spécifie les attributs qu'il souhaite obtenir (Id = {rev₁, .., revₙ}) en retour, et il spécifie également pour chaque attribut, des critères devant être remplis par l'attestation correspondante.

Le fournisseur de service peut également préciser dans cette requête sa politique quant au traitement de l'identité (il peut par exemple s'engager à conserver les données, à ne pas les transmettre à des tiers, etc.), ainsi que l'identité publique que possède ce fournisseur de service, cette identité étant par exemple fournie sous forme d'un certificat numérique.

Dans ce cadre, le fournisseur de service dispose d'un ensemble de fonctions lui permettant de formuler la requête, c'est-à-dire de définir les attributs ou données relatives à l'identité numérique qu'il requiert pour donner accès à son service.

Ces fonctions comportent notamment les possibilités de :
- demander directement un attribut, comme par exemple le prénom, ce qui permet par exemple de poser la question "quel est votre prénom ?" ;
- demander si un attribut est supérieur (ou inférieur) à une valeur, ce qui revient par exemple à poser la question "êtes-vous majeur ?" lorsque l'attribut en question est l'âge qui se dérive lui-même de la date de naissance ;
- demander si un attribut est égal ou non à une valeur, ce qui permet par exemple de demander si le sujet est ou n'est pas de nationalité française sans pour autant récupérer sa nationalité en cas de réponse négative.

Lorsque le fournisseur de service reçoit la revendication d'identité émise par le composant de sécurité actif du terminal mobile en réponse à la requête qu'il lui a adressé, il vérifie que cette revendication concorde avec l'identité requise.

Par exemple le fournisseur de service vérifie que l'âge est bien inférieur à 18 ans ou que la réponse à la question "Avez-vous moins de 18 ans ?" est bien affirmative, et il vérifie que l'attestation fournie pour cet attribut répond aux critères qu'il a fixés initialement.

Lorsque ces différentes conditions sont réunies, le fournisseur de service fournit le service demandé, et il le refuse sinon.

### Attestations

Dans la requête en revendication d'identité, le fournisseur de service spécifie pour chaque attribut de l'identité numérique demandé, les critères auxquels doit répondre l'attestation correspondante.

Ces critères peuvent se présenter sous forme d'une liste de fournisseurs d'identité dont le fournisseur de service considère qu'il est acceptable qu'ils attestent de l'attribut en question. Selon le cas, cette liste peut être relative à l'ensemble des attributs demandés, ou bien il peut être prévu une liste de fournisseurs d'identité pour chaque attribut demandé.

Ces critères peuvent également se présenter sous forme d'une spécification requise pour l'élaboration de l'attestation en question : par exemple, la requête en revendication de propriété peut spécifier que pour tel attribut, il est nécessaire que l'attestation comporte la saisie par le sujet du code PIN de la carte SIM.

Une autre possibilité consiste en ce que la requête comporte pour chaque attribut demandé, une note de confiance requise qui est déterminée par le fournisseur de service.

Dans ce cas, le composant de sécurité actif bâtit la revendication d'identité en choisissant elle-même le ou les fournisseurs d'identité dont elle espère qu'ils ont des notes supérieures ou égales aux notes requises par le fournisseur de service. Autrement dit, lorsque la note est élevée, le composant de sécurité actif choisit un fournisseur d'identité qui est "bien côté", et dans le cas contraire, elle choisit un fournisseur qui est moins bien côté.

### Avantages de l'invention

D'une manière générale, le choix d'un composant de sécurité actif qui réside dans le terminal mobile permet de disposer dans le terminal mobile d'un espace sécurisé où peuvent être enregistrés des attributs de l'identité numérique et/ou des informations relatives à ces attributs.

Ce composant de sécurité actif permet également de dériver des attributs, ainsi d'ajouter un élément de confiance dans la gestion de l'identité numérique, tout en offrant la possibilité de restreindre l'accès aux attributs de l'identité numérique à des utilisations précises et consenties par le sujet.

L'invention apporte ainsi une solution de gestion d'identité numérique qui permet d'assurer la protection de la vie privée tout en donnant à l'utilisateur conscience de son identité numérique en lui demandant à chaque fois que nécessaire de valider la transmission d'informations personnelles jugées critiques.

## Revendications

1. Procédé pour gérer un transfert de données relatives à l'identité numérique d'un sujet, entre un terminal de communication utilisé par le sujet et un fournisseur de service, dans lequel :
- le fournisseur de service adresse au terminal de communication une requête de revendication d'identité spécifiant les attributs de l'identité numérique du sujet devant être fournis avec des attestations correspondantes, ainsi que des critères devant être remplis par ces attestations pour qu'elles soient acceptables pour le fournisseur de service, les attestations relatives à des attributs distincts pouvant le cas échéant provenir de fournisseurs d'identité distincts ;
- dans lequel c'est un composant de sécurité actif résidant dans le terminal de communication qui construit la revendication d'identité à partir de données relatives à l'identité numérique du sujet mémorisées dans le terminal et/ou collectées par ce composant de sécurité actif auprès d'un ou plusieurs fournisseurs d'identité accessible par internet ou tout autre moyen de communication ;
- et dans lequel c'est la revendication d'identité construite par le composant de sécurité actif résidant dans le terminal de communication qui est adressée au fournisseur de service pour acceptation.

2. Procédé selon la revendication 1, dans lequel le composant de sécurité actif résidant dans le terminal de communication comporte une ou plusieurs composants d'application résidant dans une carte SIM équipant le terminal de communication.

3. Procédé selon la revendication 1 ou 2, dans lequel une partie des attributs de l'identité numérique du sujet sont mémorisés directement dans le terminal de communication.

4. Procédé selon l'une des revendications 1 à 3, dans lequel le composant de sécurité actif sollicite l'utilisateur pour qu'il donne son accord à la transmission de données relatives à son identité numérique lorsque ces données sont considérées comme critiques.

5. Procédé selon l'une des revendication 1 à 4, dans lequel le composant de sécurité actif est agencé pour pouvoir attester des attributs de la revendication d'identité au nom de l'opérateur auquel le terminal de communication est lié.

## Patentansprüche

1. Verfahren zur Verwaltung einer Datenübertragung bezüglich der digitalen Identität eines Subjekts zwischen einem vom Subjekt verwendeten Kommunikationsendgerät und einem Dienstanbieter, wobei
- der Dienstanbieter eine Anforderung eines Identifikationsanspruchs an das Kommunikationsendgerät schickt, der die Attribute der digitalen Identität des Subjekts, die mit entsprechenden Bescheinigungen geliefert werden müssen, sowie Kriterien spezifiziert, die von den Bescheinigungen erfüllt werden müssen, damit sie für den Dienstanbieter akzeptabel sind, wobei die Bescheinigungen bezüglich einzelner Attribute ggf. von unterschiedlichen Identity Providern kommen können;
- wobei es eine im Kommunikationsendgerät vorhandene, aktive Sicherheitskomponente ist, die den Identitätsanspruch ausgehend von Daten bezüglich der digitalen Identität des Subjekts konstruiert, die im Endgerät gespeichert sind und/oder von dieser aktiven Sicherheitskomponente bei einem oder mehreren Identity Providern eingesammelt werden, der/die über das Internet oder jede andere Kommunikationseinrichtung zugänglich ist/sind;
- und wobei es der von der im Kommunikationsendgerät vorhandenen aktiven Sicherheitskomponente konstruierte Identitätsanspruch ist, der zur Genehmigung an den Dienstanbieter geschickt wird.

2. Verfahren nach Anspruch 1, wobei die im Kommunikationsendgerät vorhandene aktive Sicherheitskomponente eine oder mehrere Anwendungskomponenten aufweist, die in einer zur Ausrüstung des Kommunikationsendgeräts gehörenden SIM-Karte vorhanden ist/sind.

3. Verfahren nach Anspruch 1 oder 2, wobei ein Teil der Attribute der digitalen Identität des Subjekts direkt im Kommunikationsendgerät gespeichert ist.

4. Verfahren nach einem der Ansprüche 1 bis 3, wobei die aktive Sicherheitskomponente vom Benutzer fordert, dass er seine Zustimmung zur Übertragung von Daten bezüglich seiner digitalen Identität gibt, wenn diese Daten kritisch sind.

5. Verfahren nach einem der Ansprüche 1 bis 4, wobei die aktive Sicherheitskomponente eingerichtet ist, Attribute des Identitätsanspruchs im Namen des Betreibers bescheinigen zu können, mit dem das Kommunikationsendgerät verbunden ist.

## Claims

1. Method for managing a transfer of data relating to the digital identity of a subject, between a communication terminal used by the subject and a service provider, in which:
- the service provider addresses to the communication terminal an identity-claiming request specifying the attributes of the digital identity of the subject having to be supplied with corresponding proofs, as well as criteria having to be fulfilled by these proofs for them to be acceptable for the service provider, the proofs relating to distinct attributes being able, if necessary, to originate from distinct identity providers;
- in which it is an active security component resident in the communication terminal which constructs the claim of identity from data relating to the digital identity of the subject stored in the terminal and/or collected by this active security component from one or more identity providers accessible by internet or any other communication means;
- and in which it is the claim of identity constructed by the active security component resident in the communication terminal which is addressed to the service provider for acceptance.

2. Method according to Claim 1, in which the active security component resident in the communication terminal comprises one or more application components resident in a SIM card with which the communication terminal is equipped.

3. Method according to Claim 1 or 2, in which some of the attributes of the digital identity of the subject are stored directly in the communication terminal.

4. Method according to one of Claims 1 to 3, in which the active security component prompts the user for him or her to give his or her agreement to the transmission of data relating to his or her digital identity when these data are considered critical.

5. Method according to one of Claims 1 to 4, in which the active security component is arranged to be able to prove attributes of the claim of identity in the name of the operator to which the communication terminal is linked.
